# EUROPEAN PATENT SPECIFICATION

(11) **EP 1 041 497 B1**
(45) Date of publication and mention of the grant of the patent: **19.01.2005**
(21) Application number: 00302729.9
(22) Date of filing: 31.03.2000
(51) Int. Cl.: G06F 17/30

(54) **Information fetching control scheme using data type dependent strategy for reducing user response time**
Verfahren zum Steuern des Abrufs von Information mit einer vom Datentyp abhängigen Strategie um die Antwortzeit für die Verbraucher zu verringern
Procédé de contrôle de l'extraction d'informations utilisant une stratégie dépendante du type de données pour réduire le temps de réponse à l'utilisateur

(30) Priority: 31.03.1999 JP 9375799
(43) Date of publication of application: 04.10.2000
(73) Proprietor: KABUSHIKI KAISHA TOSHIBA, Kawasaki-shi, Kanagawa-ken 210-8572 (JP)
(72) Inventor: Muranaga, Tetsuro, c/o Intellectual Property Div., Tokyo (JP); Yoshida, Hideki, c/o Intellectual Property Div., Tokyo (JP); Ito, Kiyoshi, c/o Intellectual Property Div., Tokyo (JP); Kimura, Tetsuro, c/o Intellectual Property Div., Tokyo (JP)
(74) Representative: Midgley, Jonathan Lee

(56) References cited:
- EP-A- 0 811 939
- WO-A-97/44747
- WO-A-98/43177

## Description

### BACKGROUND OF THE INVENTION

### FIELD OF THE INVENTION

The present invention relates to an information fetching control scheme for determining a data fetching strategy in a WWW system in which information is transmitted from a server side to a client side and presented to a user.

### DESCRIPTION OF THE BACKGROUND ART

A WWW (World Wide Web) system is a widely used information access system in which a user requests information from a client device and a data server device provides information in response. In the WWW, multimedia document data are mutually linked so that a user accesses information by traversing links among documents. At a time of information access, a communication for requesting data to a Web server is made from a client used by the user, and the requested data are provided to the client in response as the Web server returns a response.

The client and the Web server are connected through the Internet, and there are cases where a system called proxy server for relaying communications is provided between the client and the Web server. The proxy server functions as a Web server with respect to the client, and as a client with respect to the Web server. It is a common practice to make the Web accesses faster by caching frequently accessed Web documents in the proxy server.

In the above described WWW system, in many cases a bandwidth of an Internet transmission line is limited so that accesses are not very fast. For example, the Internet connection circuit usually used by mobile workers and home PC users is a public network which has a bandwidth in a range of 9.6 to 64 Kbps, which is about 100 to 1000 times slower compared with a 10 Mbps LAN connection. Also, in the case of making the Internet connection from an office LAN, a bandwidth of a transmission line on the Internet side can be limited. For example, there are cases where a connection from the office to a proxy server located at an access point for the Internet is the LAN connection, but a connection from the proxy server to the Internet is a dedicated line connection with a bandwidth of 64 Kbps to 1.5 Mbps, which is to be shared by many office users, so that this part becomes a bottleneck of the Web accesses.

When the Web accesses are made via such a low bandwidth transmission line, there arises a problem that a response time for the user until the requested information is displayed to the user becomes long. Also, it is possible to use a setting for not transferring images in such a low bandwidth transmission line in order to make the Web accesses faster, but this can cause another problem that the information cannot be conveyed to the user sufficiently because of the total lack of images.

WO-A-98/43177 describes an information fetching control system comprising a fetching unit configured to fetch a structured document by transmitting a fetching request to a server device. A parser then selects an appropriate transcode service provider based, for example, on the content type of the data stream.

Accordingly the present invention provides an information fetching control system, as defined in Claim 1; an information fetching control method as defined in Claim 17; and a computer usable medium having computer readable program codes embodied therein for causing a computer to function as an information fetching control system as defined in Claim 18.
It is therefore an advantage of the present invention that it can provide an information fetching control scheme capable of carrying out data fetching by effectively utilizing a low bandwidth transmission line so as to shorten the response time for the user until the requested information is presented to the user.

Other features and advantages of the present invention will become apparent from the following description of preferred embodiments taken in conjunction with the accompanying drawings.

Fig. 1 is a block diagram showing an exemplary basic configuration of an information fetching control system according to one embodiment of the present invention.

Fig. 2 is a schematic diagram showing an exemplary network configuration in which the information fetching control system of Fig. 1 is incorporated in a Web browser.

Fig. 3 is a diagram showing an exemplary content of a structured document to be handled by the information fetching control system of Fig. 1.

Fig. 4 is a diagram showing a structure of the structured document shown in Fig. 3.

Fig. 5 is a diagram showing one exemplary form of display of the structured document shown in Fig. 3.

Fig. 6 is a diagram showing another exemplary form of display of the structured document shown in Fig. 3.

Fig. 7 is a block diagram showing an exemplary internal configuration of the Web browser and the information fetching control system shown in Fig. 2.

Fig. 8 is a flow chart for an exemplary operation of the Web browser and the information fetching control system shown in Fig. 7.

Fig. 9 is a diagram showing an exemplary Web browser setting information used in the Web browser and the information fetching control system shown in Fig. 7.

Fig. 10 is a diagram showing an exemplary data structure obtained by a data analysis unit in the information fetching control system shown in Fig. 7.

Fig. 11 is a flow chart for an exemplary operation of the data analysis unit in the information fetching control system shown in Fig. 7.

Fig. 12 is a flow chart for a first half of an exemplary operation of a data fetching strategy determining unit in the information fetching control system shown in Fig. 7.

Fig. 13 is a flow chart for a second half of an exemplary operation of a data fetching strategy determining unit in the information fetching control system shown in Fig. 7.

Fig. 14 is a diagram showing a part of exemplary rules used in the data fetching strategy determining unit in the information fetching control system shown in Fig. 7.

Fig. 15 is a diagram showing a part of exemplary rules used in the data fetching strategy determining unit in the information fetching control system shown in Fig. 7.

Fig. 16 is a diagram showing a part of exemplary rules used in the data fetching strategy determining unit in the information fetching control system shown in Fig. 7.

Fig. 17 is a diagram showing a part of exemplary rules used in the data fetching strategy determining unit in the information fetching control system shown in Fig. 7.

Fig. 18 is a schematic diagram showing an exemplary network configuration in which the information fetching control system of Fig. 1 is incorporated in a Web proxy server.

Fig. 19 is a block diagram showing an exemplary internal configuration of the Web proxy server and the information fetching control system shown in Fig. 18.

Fig. 20 is a flow chart for an exemplary operation of the Web proxy server and the information fetching control system shown in Fig. 18.

Fig. 21 is a schematic diagram showing an exemplary network configuration including in which the information fetching control system of Fig. 1 is incorporated in a Web proxy server which is provided together with a Web browser on a single computer.

Fig. 22 is a schematic diagram showing an exemplary network configuration in which the information fetching control system of Fig. 1 is incorporated in each one of a plurality of Web proxy servers.

Fig. 23 is a schematic diagram showing an exemplary network configuration in which the information fetching control system of Fig. 1 is incorporated in each one of a Web browser and a Web proxy server.

### DETAILED DESCRIPTION OF THE PREFERRED EMBODIMENTS

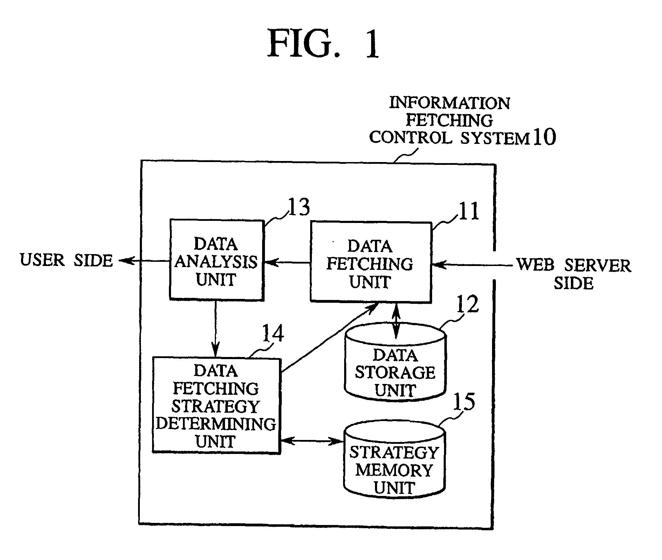

Referring now to Fig. 1 to Fig. 23, the preferred embodiments of an information fetching control scheme according to the present invention will be described in detail.

Fig. 1 shows an exemplary basic configuration of an information fetching control system according to one embodiment of the present invention. This information fetching control system 10 comprises a data fetching unit 11 for fetching information from Web servers, a data storage unit 12 for storing and maintaining the fetched data, a data analysis unit 13 for carrying out a syntactic analysis of the fetched data, a data fetching strategy determining unit 14 for determining a data fetching strategy according to a result of the data analysis, and a strategy memory unit 15 for storing rules (a group of rules on fetching manners) necessary in determining the strategy. In addition, a data conversion unit (not shown) for appropriately converting the fetched data may also be provided on the user side of the data analysis unit.

As described in further detail below, this information fetching control system 10 has a function for fetching information specified from a user side (information comprising entire Web page data or a part of such data (a part excluding in-line data in the case of a setting for not fetching in-line data, for example)) from a corresponding Web server and outputting the fetched data to the user side, when the specified information does not exist in the data storage unit 12, and a function for reading out the information specified from the user side from the data storage unit 12 and outputting the read out information to the user side, when the specified information exists in the data storage unit 12.

This information fetching control system 10 also has a function for fetching prescribed types of related information of the fetched information (such as pages linked from the fetched page, pages linked from linked pages, in-line images of each page, etc.) in prescribed formats (such as entire data, a format of reduced information size, etc.) from a corresponding Web server and storing and maintaining the fetched related information in the data storage unit 12, and a function for determining an information fetching strategy regarding which related information should be fetched, in a sophisticated manner by accounting for user commands and data attributes.

Also, this information fetching control system 10 can output the requested information to the user side through the data analysis unit 13 after converting a part of the information using the data conversion unit. For example, it can be made such that the in-line data of the Web page data are not to be fetched from the Web server but instead a substitute image prepared in advance or generated by then is outputted as the in-line data.

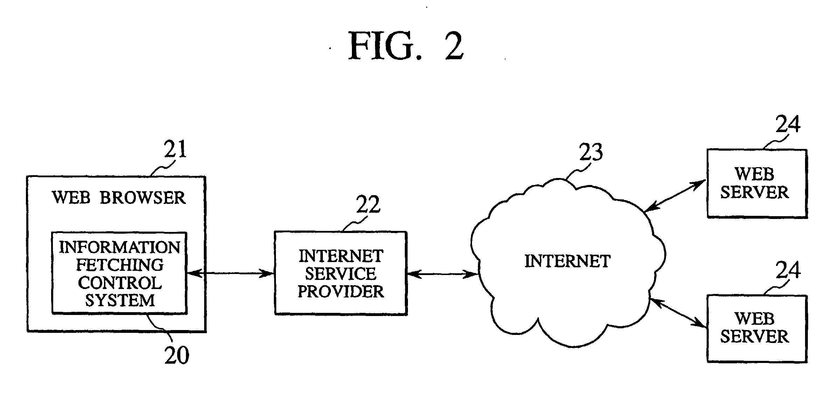

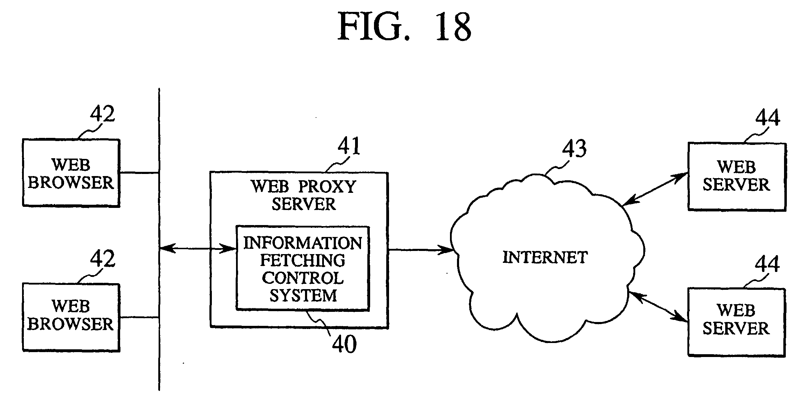

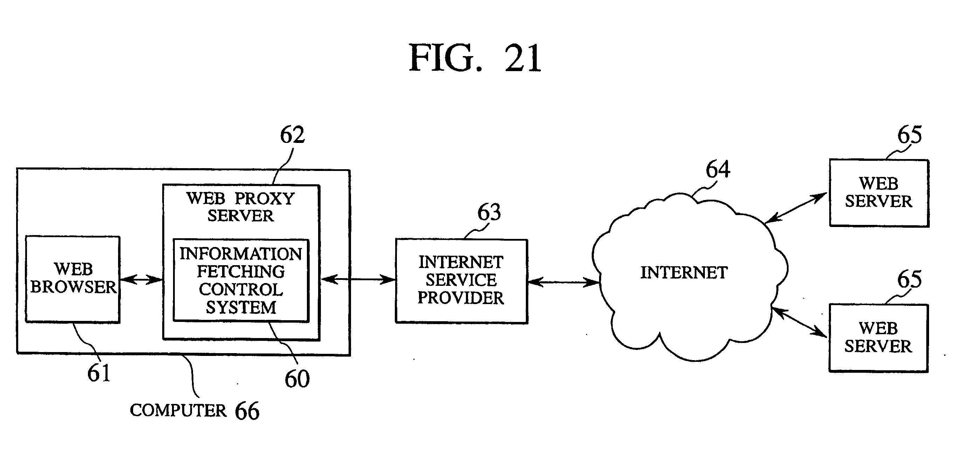

In the following, the information fetching control system of Fig. 1 will be described in further detail, in various embodiments including an embodiment (Fig. 2) in which this information fetching control system is incorporated in a Web browser, an embodiment (Fig. 18) in which this information fetching control system is incorporated into a Web proxy server, an embodiment (Fig. 21) in which an existing Web browser and a Web proxy browser incorporating this information fetching control system are provided on a single computer, an embodiment in which a plurality of Web proxy servers incorporating this information fetching control system are connected in multiple stages and cooperated, and an embodiment in which a Web browser incorporating this information fetching control system and a Web proxy server incorporating this information fetching control system are cooperated.

First, an embodiment in which the information fetching control system of Fig. 1 is incorporated into a Web browser will be described.

Fig. 2 shows an exemplary network configuration from a Web browser to a Web server in this case, where an information fetching control system 20 is incorporated in a Web browser 21.

The user of the Web browser 21 can be a home PC user or a mobile worker, for example. In general, the user accesses an Internet service provider 22 via a public network, and accesses the Internet 23 from there. By requesting information from the Web browser 21, the user can receive information provided from a Web server 24 connected to the Internet 23.

A connection between the Web browser 21 and the Internet service provider 22 is a telephone network which has a bandwidth in a range of 9.6 to 64 Kbps, which is about 100 to 1000 times slower compared with a 10 Mbps LAN connection. At a time of the Web accesses via such a low bandwidth transmission line, the response time for the user until the requested information is presented to the user is shortened by controlling the data fetching in a sophisticated manner at the information fetching control system 20.

First, the basic HTML (HyperText Markup Language) processing at the Web browser will be described.

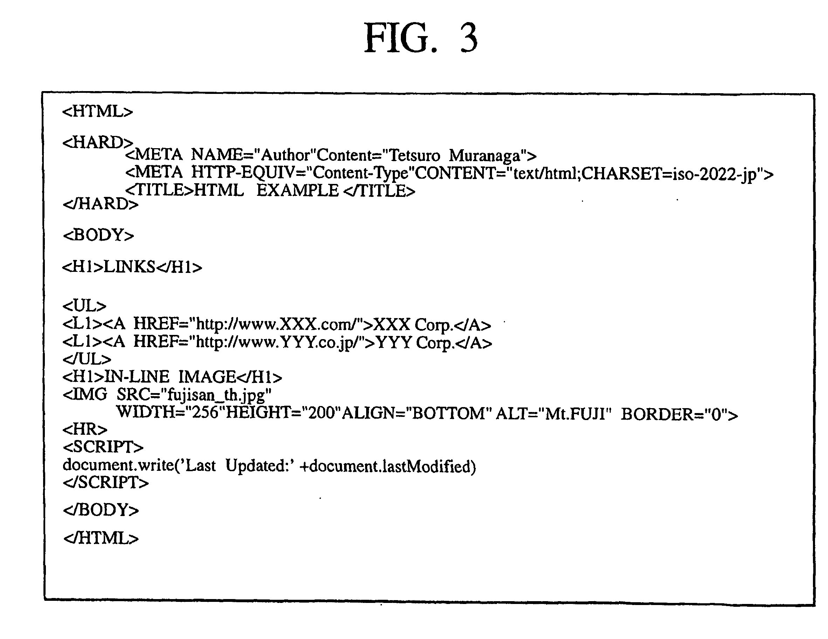

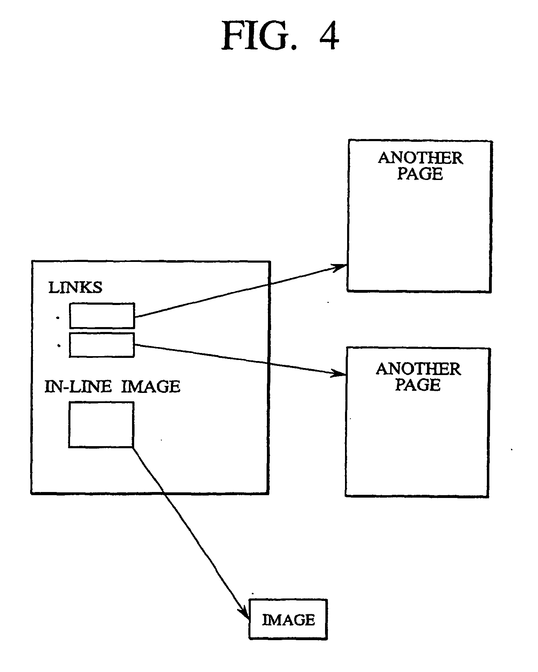

The Web information is described using HTML. Fig. 3 shows an exemplary information (structured document) described in HTML. Fig. 4 shows a structure of this information of Fig. 3. This structured document has two links to the other pages (<A HREF ...> sections) and one in-line image specification (<IMG SRC ...> section).

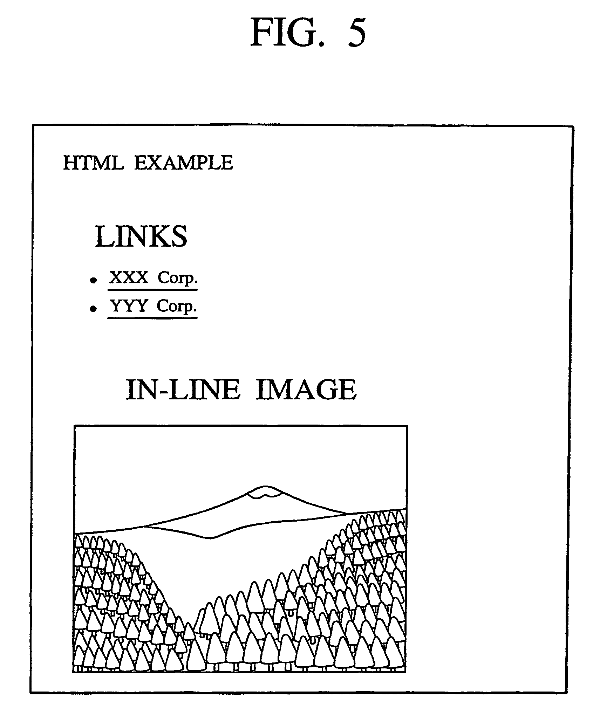

When the document of Fig. 3 is fetched from the Web server and displayed at the Web browser, the result appears as shown in Fig. 5. In Fig. 5, the displayed character string "HTML EXAMPLE" is what is specified by a tag of a form <TITLE>...</TITLE> in Fig. 3, and the character strings "LINKS" and "IN-LINE IMAGE" are what are specified by tags of a form <H1>...</H1> in Fig. 3.

Next, the links will be described. In the document of Fig. 3, a tag of a form <A HREF = "http://www.XXX.com/">XXX corp.</A> is a link to another document. In the display on the Web browser, as shown in Fig. 5, a character string "XXX corp." is underlined to indicate that this is a link to another document. When the user clicks this character string using a mouse, for example, the Web browser requests and fetches a next document data and displays it.

Examples of such tag descriptions for specifying the "link information" that indicates a next information to be fetched according to a command from the user include the following.
* Link 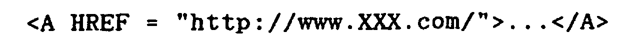
* Clickable Map 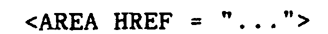
* Form

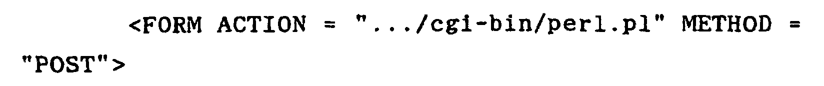

Next, the in-line image will be described. In the document of Fig. 3, a tag of a form <IMG SRC = "fujisan_th.jpg" WIDTH = ...> indicates an image to be embedded in that document, that is the in-line image. When this tag is found during the HTML analysis, the Web browser fetches the image data indicated by the SRC attribute in the tag, and displays it. A difference from the link to another document described above is that the Web browser issues the data fetching request without a selection operation such as clicking by the user.

Also, this tag <IMG SRC = "fujisan_th.jpg" WIDTH = ... ALT = "Mt. FUJI"> has the ALT attribute specified. This ALT attribute specifies that a character string indicated by this ALT attribute, which is "Mt. FUJI" in this example, should be displayed instead of the image when the image indicated by SRC attribute cannot be fetched.

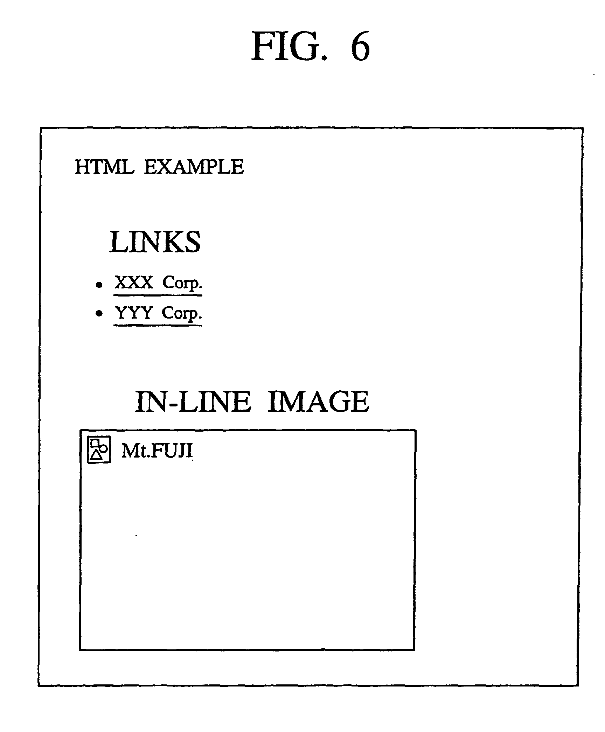

Also, when it is possible to make a setting for either fetching or not fetching images in the browser and this setting is chosen to be "not fetching images" in the browser, the character string indicated by the ALT attribute will be displayed instead of issuing the image fetching request. Fig. 6 shows an exemplary display in which the character string "Mt. FUJI" as specified by the ALT attribute is displayed instead of the in-line image.

Examples of such a tag description for specifying "in-line information" which is to be presented (displayed, playbacked, etc.) simultaneously as the display of the original page by fetching data specified in the original page include the following.
* In-line image specification 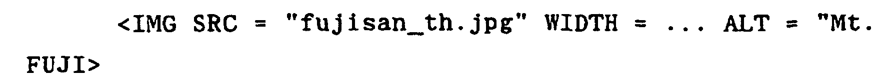
* Background image specification 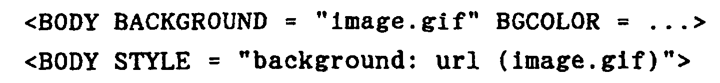
* Animation/video information (such as In-line movie) specification 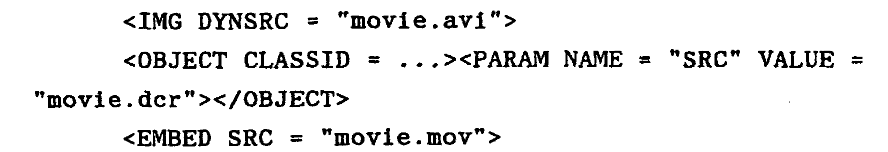
* Frame information specification 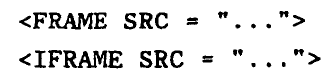
* Sound/Music information specification 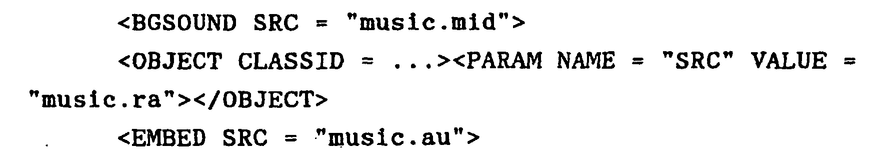
* 3D image information specification 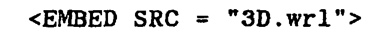
* Program specification

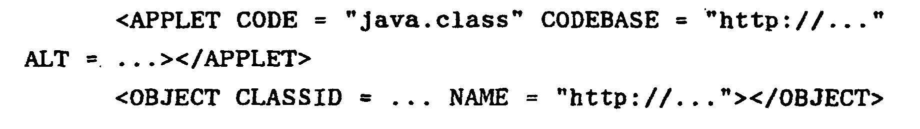

Next, the information fetching control system 20 and the Web browser 21 of Fig. 2 will be described in further detail.

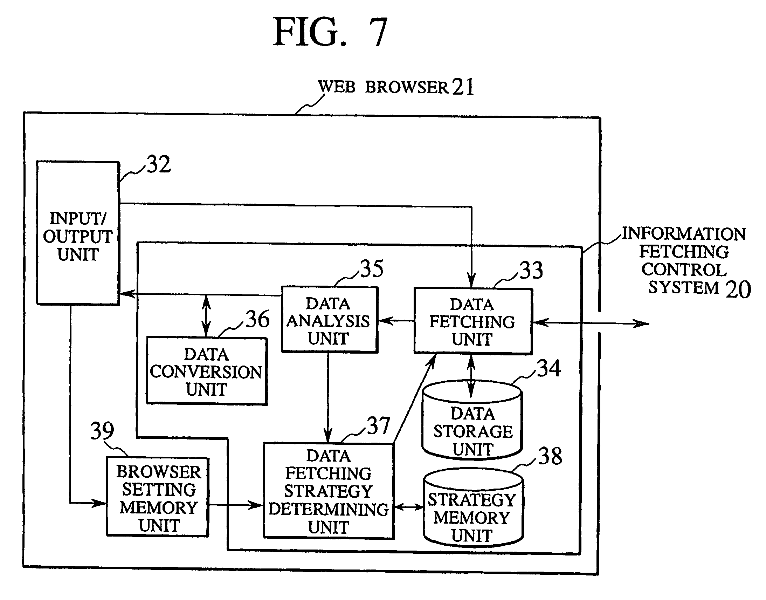

Fig. 7 shows an exemplary internal configuration of the information fetching control system 20 and the Web browser 21 of Fig. 2.

The Web browser 21 has an input/output unit 32 for realizing interactive operations with respect to the user, at which the information fetching request of the user is entered and from which the data fetching request is transmitted to the Web server through a data fetching unit 33.

The data fetching unit 33 receives data from the Web server and store it into a data storage unit 34. At the same time, this data is given to the input/output unit 32 through a data analysis unit 35.

The data analysis unit 35 analyzes the received HTML data, and presents that page to the user from the input/output unit 32 in a specified layout. In this embodiment, depending on the analysis result of the data analysis unit 35, the received HTML data is converted at the data conversion unit 36 first and then given to the input/output unit 32 for display, but this data conversion unit 36 is not an indispensable element.

On the other hand, a data fetching strategy determining unit 37 determines a fetching strategy for data to be requested next, according to the analysis result of the data analysis unit 35, by referring to rules (a group of rules on fetching manners) stored in the strategy memory unit 38. In some cases, the data fetching strategy determining unit 37 may determine the data fetching strategy by referring to a setting information of a browser setting memory unit 39 which stores a browser operation setting (a group of rules for allowing or prohibiting fetching).

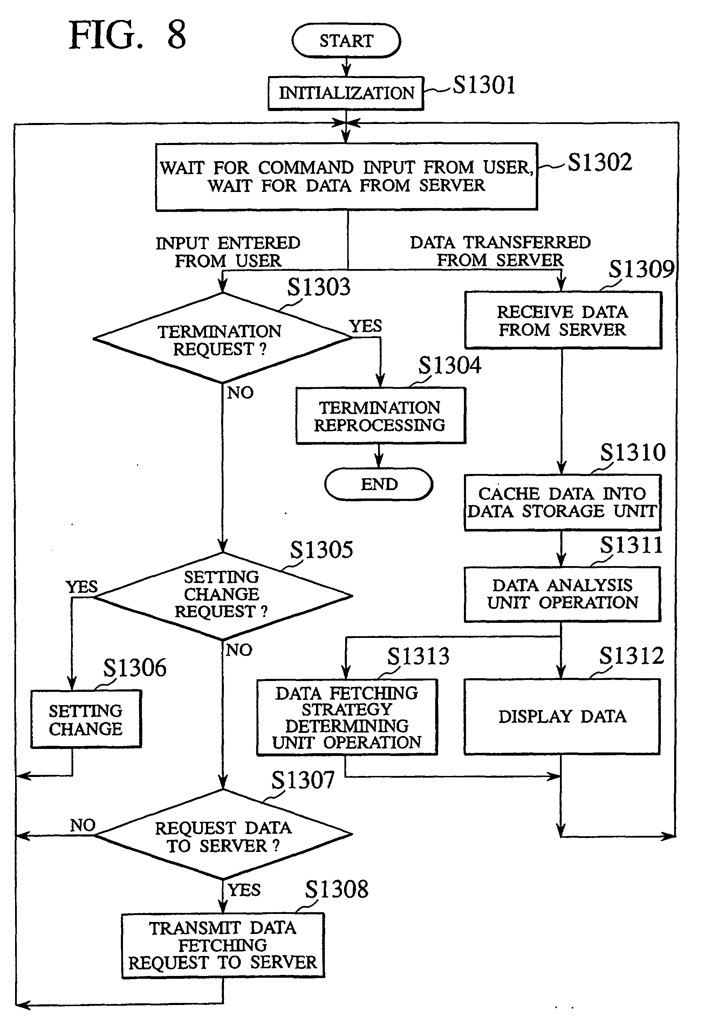

Fig. 8 shows an exemplary operation of the information fetching control system 20 and the Web browser 21.

After the initialization (step S1301), the Web browser 21 is put in a state of waiting for input from the user or data from the server (step S1302).

When there is an input from the user in this state, and if it is a termination request (step S1303 YES), the termination processing is carried out (step S1304). If the input from the user is a command for browser setting change (step S1305 YES), the setting change is made (step S1306) and the Web browser 21 is put in an input/communication waiting state again (step S1302).

If the input from the user is a data request with respect to the Web server (step S1307 YES), the data fetching request with respect to the Web server is transmitted from the data fetching unit 33 to the corresponding Web server (step S1308) and the Web browser 21 is put in an input/communication waiting state again (step S1302).

When data are transferred from the Web server as a result of transmitting the data fetching request in response to a request from the user, the data fetching unit 33 receives this data (step S1309), and caches it into the data storage unit 34 (step S1310). Then, this data is analyzed at the data analysis unit 35 (step S1311).

This data is given from the data analysis unit 35 to the input/output unit 32 and displayed there (step S1312), and the Web browser 21 is put in an input/communication waiting state again (step S1302). Also, in parallel to the display of the data, the data analysis result is given from the data analysis unit 35 to the data fetching strategy determining unit 37, and the data fetching strategy determining unit 37 makes a judgement regarding the next data fetching according to the data analysis result (step S1313).

Note that the data fetching strategy (information indicating which data should be fetched and how, for example) determined by the data fetching strategy determining unit 37 is given to the data fetching unit 33, and the data fetching unit 33 carries out the data fetching according to the determined data fetching strategy. Also, depending on the hierarchical link relationship to which the data fetching strategy is applied, there are cases where the data fetched according to the data fetching strategy is subjected to the above described processing.

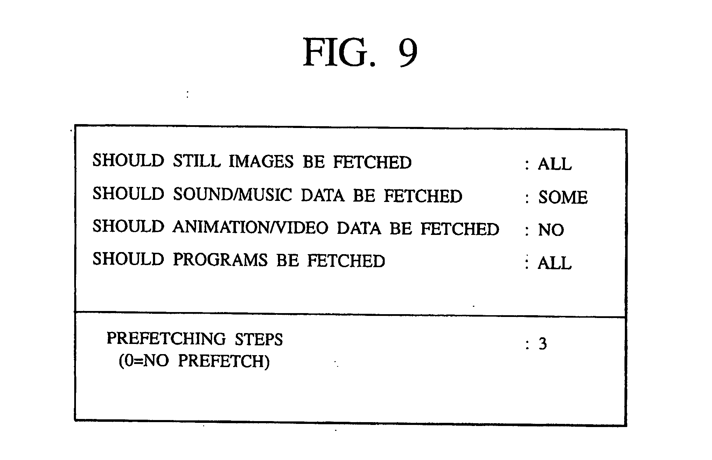

Fig. 9 shows an exemplary Web browser setting information (a group of rules for allowing or prohibiting fetching) to be specified by the user.

In the case of the Web accesses using a transmission line that is slower compared with LAN, information such as images, sounds, videos, and programs which tend to have large data sizes will require long transfer times. For example, when the linked page contains an image of a large data size, a considerable amount of time will be required since the character string indicating the link is clicked until the linked page is displayed completely.

However, depending on the purpose of the information fetching, there can be cases where it is more desirable to realize a faster display by not fetching such information or fetching such information in a form of reduced data size.

In this embodiment, the user makes a setting for each type of information which tends to have a large data size, regarding whether it should be fetched or not, and whether it should be fetched entirely or partially in the case of fetching. In addition, this setting also specifies whether data that is predicted to be viewed by the user next, that is, linked pages contained in the display page, should be prefetched while the user is viewing the displayed page or not, and how many steps should be prefetched in the case of prefetching. This information is entered through the input/output unit 32 and stored in the browser setting memory unit 39.

The user can specify this information any time during the interactive operation. Consequently, when the information such as image is not fetched or only partially fetched, if it is difficult to comprehend the fetched data, the user can change the setting to that for fetching entire data and retry the data fetching again.

Alternatively, it is also possible to provide a function for fetching entire data and presenting it only for such an information that was not fetched or only partially fetched. In this case, the user can view the entire data for this information by specifying this function using a command selection or the like, without changing the Web browser setting information.

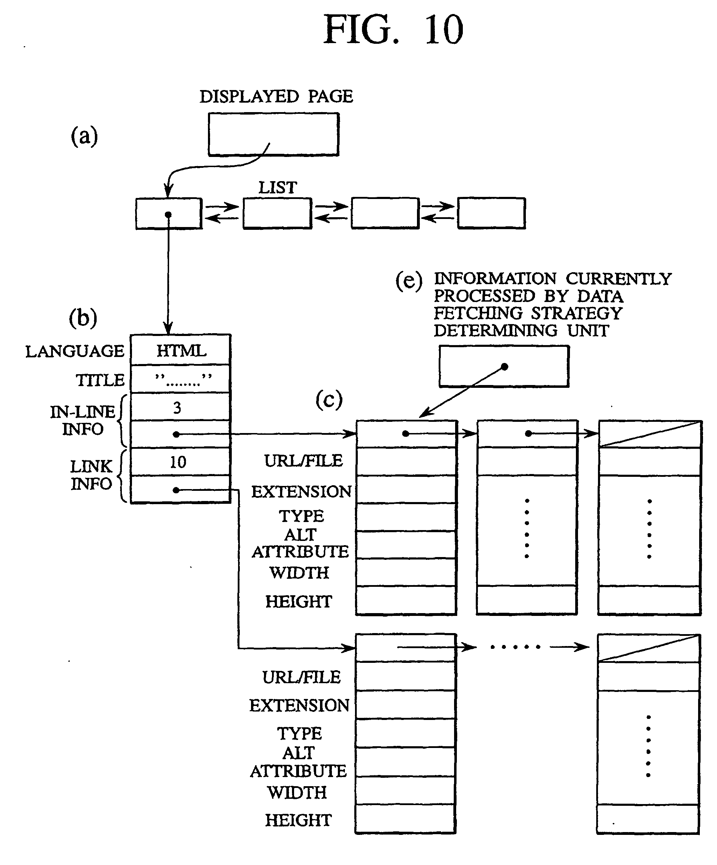

Fig. 10 shows an exemplary data structure handled by the information fetching control system 20 and the Web browser 21. This data structure indicates a result of analyzing a page fetched by the data fetching unit 33 at the data analysis unit 35, and the data fetching strategy determining unit 37 determines the data fetching strategy such as whether the next data should be fetched or not, by carrying out a processing by referring to this data structure.

A part (a) of Fig. 10 shows a list for maintaining a set of pages under the processing in this information fetching control system. A page currently displayed by the browser is pointed by a pointer. Pages newly fetched during the processing will be added to this list. On the other hand, pages for which the processing is completed will be removed from this list.

A part (b) of Fig. 10 shows a data structure of a page under the processing, which contains a language of description used for that page (in this example it is indicated that this page is described in HTML), a title of that page, the number of in-line information contained in that page and a list of the in-line information, the number of link information contained in that page and a list of the link information.

A part (c) of Fig. 10 shows a list of the in-line information contained in a page under the processing. Each element of the list contains a URL (Uniform Resource Locator) or file name of the in-line information, its extension, a data type (such as image, sound, video, etc.) of the in-line information guessed from the extension, a character string to be presented instead of the in-line information that is specified by the ALT attribute (this entry will be empty if the ALT attribute is not specified). and a width and a height of the in-line information.

A part (d) of Fig. 10 shows a list of the link information contained in a page under the processing. Each element of the list contains the same information as the in-line information shown in a part (c) of Fig. 10. Here, the entries for the width and the height will be left empty if they cannot be ascertained.

A part (e) of Fig. 10 shows a pointer to the information currently processed by the data fetching strategy determining unit 37. Namely, the in-line information shown in a part (c) of Fig. 10 or the link information shown in a part (d) of Fig. 10 is specified by this pointer.

Note that the exemplary data structure of Fig. 10 handles a plurality of data by using lists, but it is also possible to use other data structures such as arrays, tables, queues, etc., that can handle a set of data.

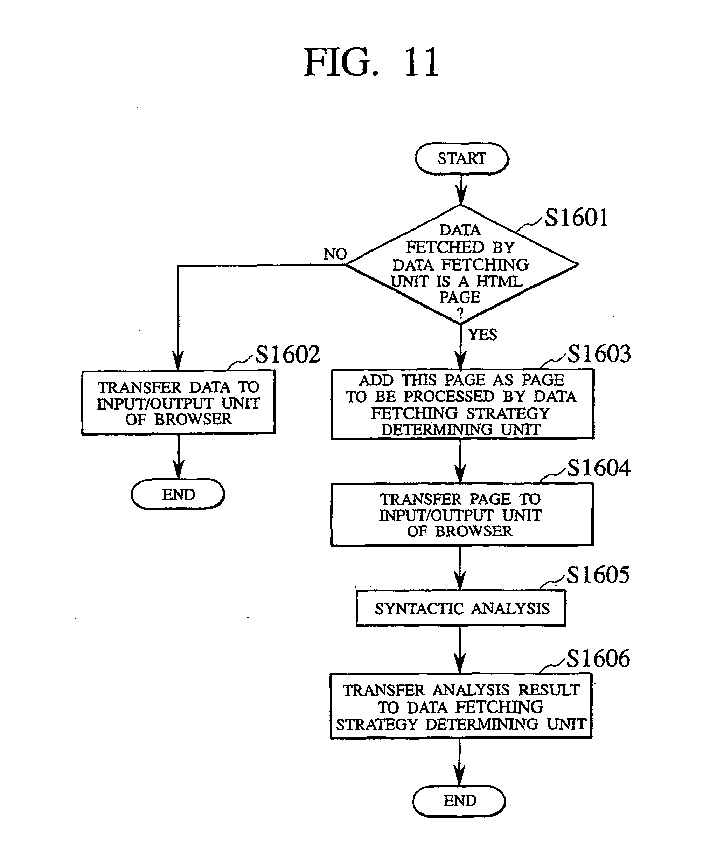

Fig. 11 shows an exemplary operation of the data analysis unit 35, which is to be carried out at the step S1311 in the processing of Fig. 8 described above.

Whether the fetched data that is currently analyzed is a HTML page or not is judged (step S1601), and this data is transferred to the input/output unit 32 if it is not a HTML page (step S1602) for presentation to the user. If it is a HTML page, this page is added to the list shown in part (a) of Fig. 10 as a page to be processed by the data fetching strategy determining unit 37 (step S1603). Then, this page is transferred to the input/output unit 32 (step S1604) for display. In parallel to that, the syntactic analysis of this page is carried out (step S1605), and the analysis result such as that shown in Fig. 10 that is obtained as a result is transferred to the data fetching strategy determining unit 37 (step S1606).

Note that those prefetched HTML pages that are not to be subjected to the analysis (the n-th HTML page in the case of the n-step prefetching, for example) will be simply stored in the data storage unit 34 and not given from the data fetching unit 33 to the data analysis unit 35, but those prefetched HTML pages that are to be subjected to the analysis (the second to the (n-1)-th HTML pages in the case of the n-step prefetching, for example) will be given to the data analysis unit 35, so that the data analysis unit 35 carries out the analysis on such HTML pages without transferring them to the input/output unit 32.

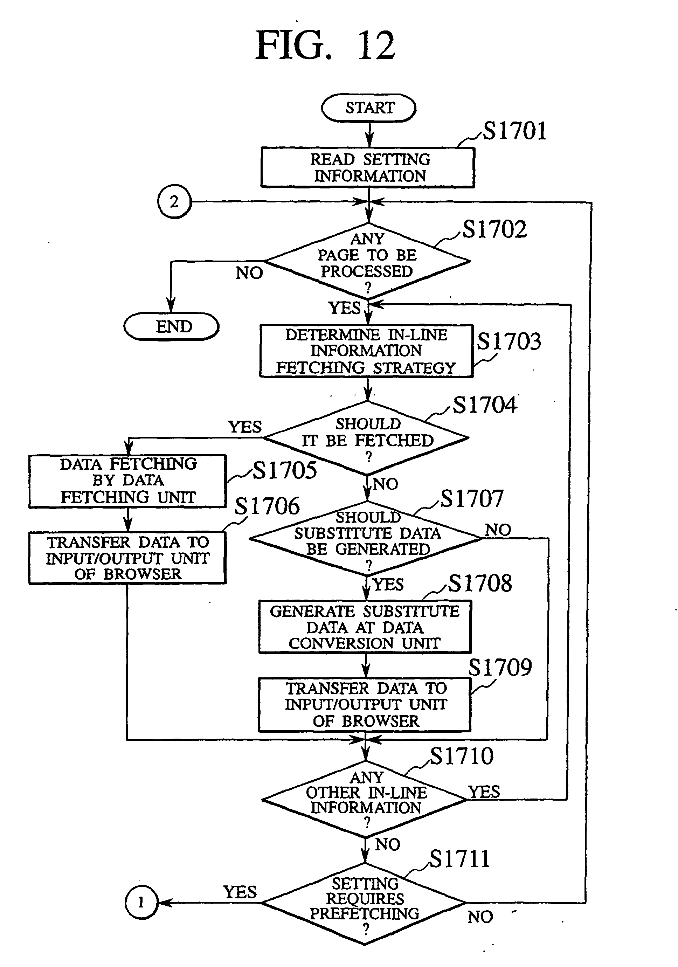

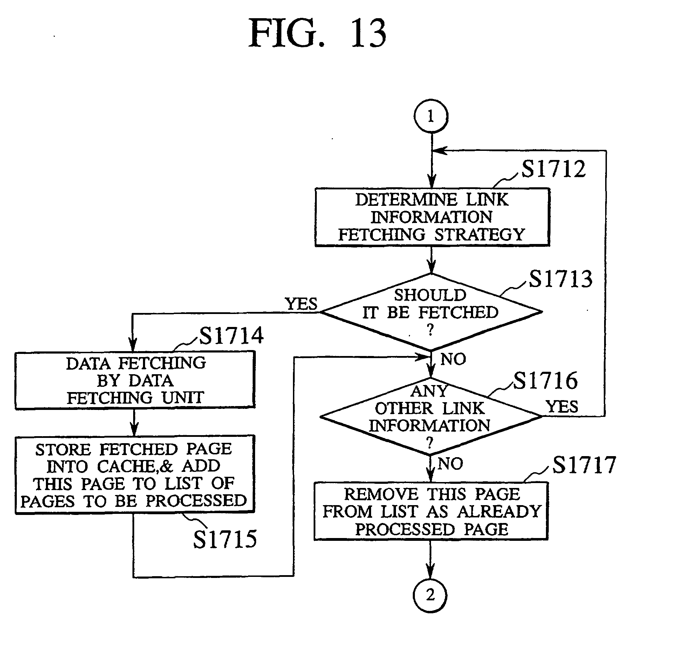

Fig. 12 and Fig. 13 show an exemplary operation of the data fetching strategy determining unit 37, which is to be carried out at the step S1313 in the processing of Fig. 8 described above.

The data fetching strategy determining unit 37 reads out the browser setting information (step S1701), and judges whether there is any page for which the data fetching strategy is to be determined or not by referring to the list shown in a part (a) of Fig. 10 (step S1702). If there is none, this processing is terminated. If there is such a page, the data fetching strategy is determined for each in-line information contained in this page (step S1703).

Here, the data fetching strategy determining unit 37 then determines a strategy as to whether the next data should be fetched, and how it should be fetched in the case of fetching, by referring to the rules stored in the strategy memory unit 38 and the browser setting information stored in the browser setting memory unit 39 such as that shown in Fig. 9 (step S1703).

If the data of the in-line information should be fetched (step S1704 YES), the data fetching unit 33 fetches the data according to the fetching method determined by the data fetching strategy determining unit 37 (step S1705), and transfers the fetched data to the input/output unit 32 (step S1706) for display.

If it is judged that the in-line information should not be fetched (step S1704 NO), whether a substitute data is to be generated or not is judged (step S1707). If the substitute data is to be generated, the substitute data is generated at the data conversion unit 36 (step S1708), and transferred to the input/output unit 32 (step S1709) for display. Then, if there are other in-line information to be processed (step S1710 YES), the above processing is repeated for all such in-line information.

When the processing of the in-line information is completed, the processing of the link information is carried out next. First, whether the setting of the browser is a setting that requires prefetching or not is judged (step S1711), and if it is a setting that does not require prefetching, the processing proceeds to the processing of the next page (step S1702) without carrying out any processing of the link information, and the above processing is repeated until all the pages to be processed are processed.

If it is a setting that requires prefetching (step S1711 YES), whether the next data indicated by the link information should be prefetched or not is judged by referring to the rules stored in the strategy memory unit 38 (step S1712). If it should be prefetched (step S1713 YES), the data fetching unit 33 prefetches this data (step S1714), and stores the prefetched page into the data storage unit 34, while also adding this page to the list shown in a part (a) of Fig. 10 as a page to be processed unless this page is the last step of the prefetching (step S1715).

The similar processing is also carried out for the other link information (step S1716), until all the link information to be processed are processed.

When the processing of the link information is completed, this page is removed from the list shown in a part (a) of Fig. 10 as an already processed page (step S1717), and the processing proceeds to the processing of the next page (step S1702).

Here, the fetching of the in-line information and the prefetching of the link information are processed separately, but they can be processed together. Also, instead of determining the data fetching strategy after analyzing the page completely, it is also possible to determine the strategy while analyzing the page.

Note that, in the above processing, the number of links to be subjected to the analysis may be set minimum such that the wasteful analysis or prefetching will be prevented in the case where some page contains links to that page itself or the case where the same link is contained in a plurality of pages to be prefetched by the multiple step prefetching.

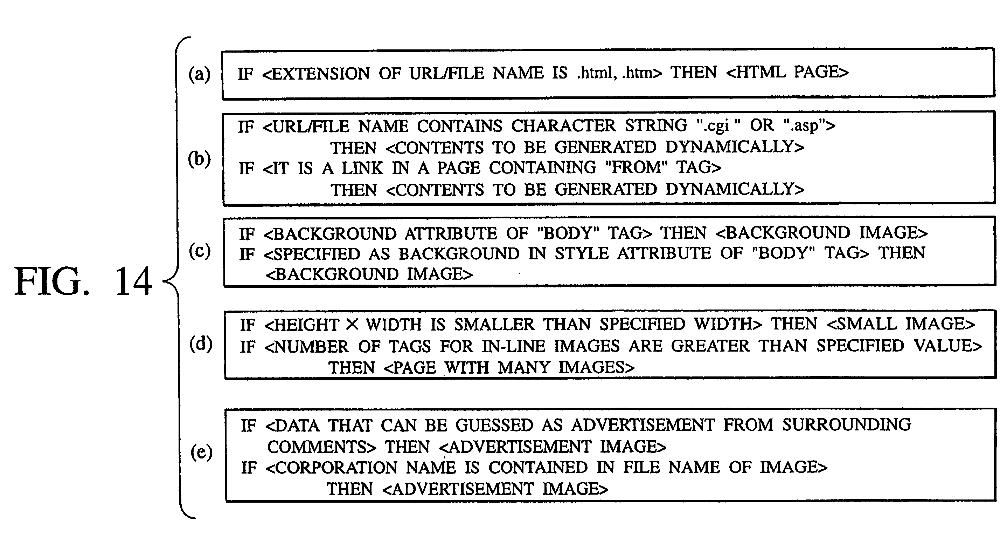

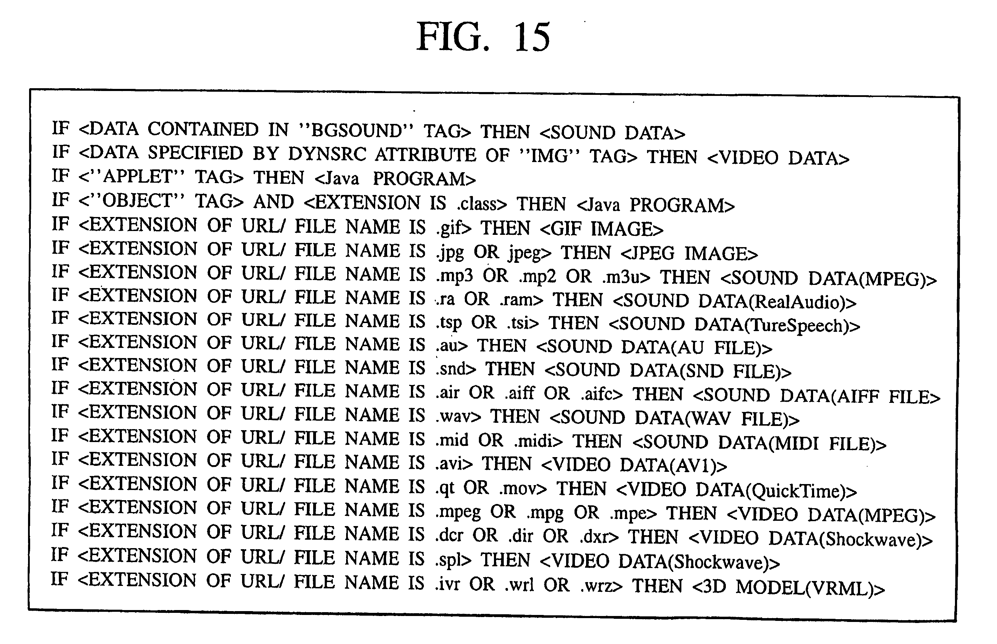

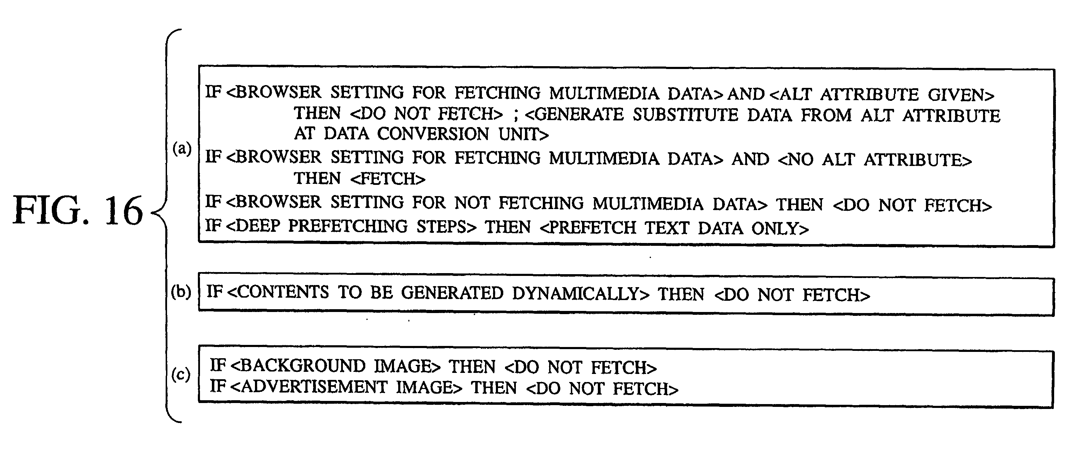

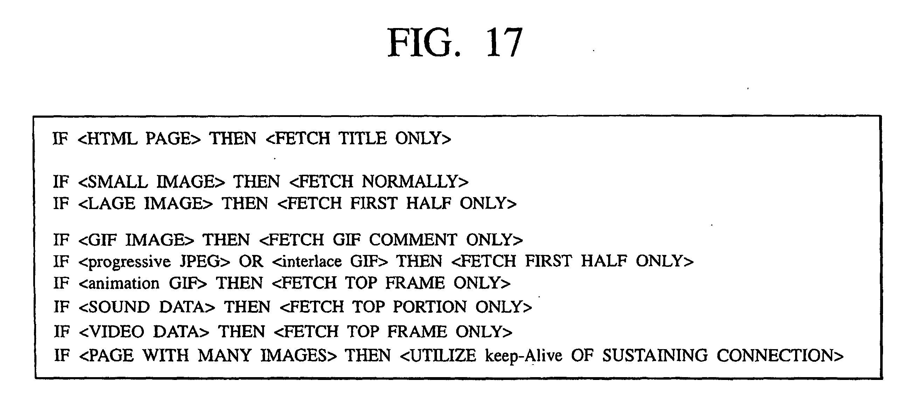

Fig. 14 to Fig. 17 shows exemplary rules (a group of rules on fetching manners) stored in the strategy memory unit 38. Fig. 14 and Fig. 15 show rules for guessing the data type (data content) of the next data, of which a rule shown in a part (a) of Fig. 14 is related to the HTML pages, rules shown in a part (b) of Fig. 14 are related to the contents to be dynamically generated, rules shown in a part (c) of Fig. 14 are related to the background, rules shown in a part (d) of Fig. 14 are related to sizes and the number of images, rules shown in a part (e) of Fig. 14 are related to the advertisement images, and rules shown in Fig. 15 are related to the data types of the multimedia data. Fig. 16 shows rules for judging whether the next data should be fetched or not, of which rules shown in a part (a) of Fig. 16 are related to the browser setting, a rule shown in a part (b) of Fig. 16 is related to the contents to be generated dynamically, and rules shown in a part (c) of Fig. 16 are related to the importance levels of the contents. Fig. 17 shows rules for determining the data fetching method.

Here, the rules are roughly classified into a group of rules for guessing the next data type (data content) (Fig. 13 and Fig. 15), a group of rules for judging whether the next data should be fetched or not (Fig. 16), and a group of rules for determining the data fetching method in the case of fetching the next data.

For a page currently under the processing, the data fetching strategy determining unit 37 refers to these rules, guesses the data type according to these rules, and determines whether the data should be fetched or not, and the fetching method (fetching manner) in the case of fetching according to the data type, these rules, and/or the browser setting.

The data type is guessed from the tag information indicating the description format of the data (such as APPLET tag indicating that it is a Java program, for example), the information indicating the data location (such as an extension ".htm" of the URL/file name indicating that it is a HTML page, for example), and the comment information related to the data (such as surrounding comments indicating that it is an advertisement image, for example).

The data types to be guessed here include: data to be generated dynamically; less important data such as advertisement or background image (data that only contribute to the attractiveness of the appearance); multimedia data such as still images, video images, speeches and 3D models; and programs.

The strategy to be determined here includes whether the data should be fetched or not, and in the case of fetching, how the data should be fetched such as fetching only a part of the data or not fetching the data and generating the substitute information instead.

For example, when the character string for specifying the data contains "gif", it is judged as a GIF image, and if its width and height are larger than the specified values, it is judged as a large GIF image, and a strategy for fetching only a first half of the data or a strategy for fetching only a comment portion can be obtained.

More specifically, using the rules shown in Fig. 14 to Fig. 17, the data fetching strategy can be determined in various situations as follows.

When it is guessed as data to be generated dynamically from an extension of the information indicating the data location, the data fetching strategy of not fetching this data can be used. For instance, data with URL or file name having an extension ".cgi" or ".asp" will not be fetched.

When it is guessed as data to be generated dynamically from the tag information, the data fetching strategy of not fetching this data can be used. For instance, data specified by the tag <FORM> will not be fetched.

When it is guessed as less important data from the comment information, the data fetching strategy of not fetching this data can be used. For instance, the advertisement data will not be fetched.

When it is guessed as less important data from the comment information, the data fetching strategy of generating the substitute data can be used. For instance, the substitute data indicating a name of the corporation who is a host of the advertisement image will be generated and displayed instead of displaying the advertisement image itself.

When it is guessed as less important data from the tag information, the data fetching strategy of not fetching this data can be used. For instance, data specified by the tag for the background image will not be fetched.

When it is guessed as less important data from the character string indicating the data location, the data fetching strategy of generating the substitute data can be used. For instance, the substitute data indicating a name of the corporation who is a host of the advertisement image will be generated and displayed instead of displaying the advertisement image itself.

When it is guessed as multimedia data from an extension of the information indicating the data location, the data fetching strategy of not fetching this data can be used. For instance, data with URL or file name having an extension ".gif", ".jpg", or ".jpeg" will not be fetched.

When it is guessed as multimedia data from an extension of the information indicating the data location, the data fetching strategy of fetching only a part of this data can be used. For instance, only the first frame of the video image will be fetched, only the first half of the speech will be fetched, or only the first half (coarse portion) of the progressive image will be fetched.

When it is guessed as multimedia data from an extension of the information indicating the data location, the data fetching strategy of generating the substitute data can be used. For instance, the substitute data according to the ALT attribute will be generated.

When the number of information indicating the data location within one page is large, the data fetching strategy of fetching only a fraction of these data can be used. For instance, in the case of a page containing many images, only first several images will be fetched.

When it is guessed as a large image from the tag information, the data fetching strategy of fetching only a part of this data can be used. For instance, only the first frame of the video image will be fetched, or only the first half (coarse portion) of the progressive image will be fetched.

When it is guessed as a large image from the tag information, the data fetching strategy of generating the substitute data can be used. For instance, the substitute data according to the ALT attribute will be generated.

Note that, no priority levels among the rules are used here, but some rules may be less useful or accurate than others, and in such a case such less useful or accurate rules may be still used with a priority level for applying such less useful or accurate rules set lower.

Also, in applying these rules, if the data happens to match with more than one rules with different judgement results (THEN section), it is possible to carry out a selection processing such as determining one rule to be applied according to the priority levels of the rules, or selecting one rule that contains the largest number of "AND".

Also, how to handle data when the data does not match with any of these rules can be specified in advance for each judgement step. For example, when no matching rule can be found in the group of rules for guessing the data type (data content) or the group of rules for judging whether the next data should be fetched or not, it can be decided that this data will not be fetched. Also, when there is no matching rule in the group of rules for determining the fetching method in the case of fetching, it can be decided that all the data will be fetched if the browser setting indicates the fetching of entire data ("all"), and that the data will not be fetched if the browser setting indicates the fetching of partial data ("some") or no data ("no").

It is also possible to specify in advance whether the browser setting should be given higher priority or the rule matching should be given higher priority, or whether one that requires the fetching of the smaller amount of information should be given higher priority or one that requires the fetching of the larger amount of information should be given higher priority, in order to deal with the case where the browser setting and the rule matching using rules that do not account for the browser setting give contradictory indications, as in the case where the browser setting indicates the fetching of the entire data ("all") or no fetching ("no") while the rule matching indicates the fetching of the first half of the image.

Alternatively, it is also possible to account for the browser setting in every rule. For example, parameters of the browser setting can be used in the condition section of every rule, or a higher level rule using the parameters of the browser setting is applied before rules that do not use the parameters of the browser setting.

It is also possible to determine the data fetching strategy such that the entire data will be fetched when the browser setting indicates "all", no data will be fetched when the browser setting indicates "no", and the rule matching is used only when the browser setting indicates "some".

It is also possible to determine the data fetching strategy by using only the rule matching, and omitting the browser setting memory unit 39.

It is also possible to determine the data fetching strategy by a mechanism other than the rule based one described above, such as a mechanism using procedural programs.

Next, another embodiment in which the information fetching control system of Fig. 1 is incorporated into a Web proxy server will be described.

Fig. 18 shows an exemplary network configuration from a Web browser to a Web server in this case, where an information fetching control system 40 is incorporated in a Web proxy server 41.

This embodiment is applicable to the case of accessing the Internet 43 via the Web proxy server 41 from a Web browser 42 on a PC connected to an office intra-net or the like, and receiving information provided by a Web server 44, for example.

A connection between the Web browser 42 and the Web proxy server 41 is a LAN (10 Mbps), and a connection to the Internet 43 is a dedicated line which has a bandwidth in a range of 64 Kbps to 1.5 Mbps, so that this section of the connection from the intra-net or the like to the Internet 43 has a high possibility of becoming a bottleneck in the Web accesses. For this reason, the information fetching control system 40 incorporated in the Web proxy server 41 controls the data fetching by the Web accesses using a slow transmission line so as to shorten the response time for the user until the requested information is presented to the user.

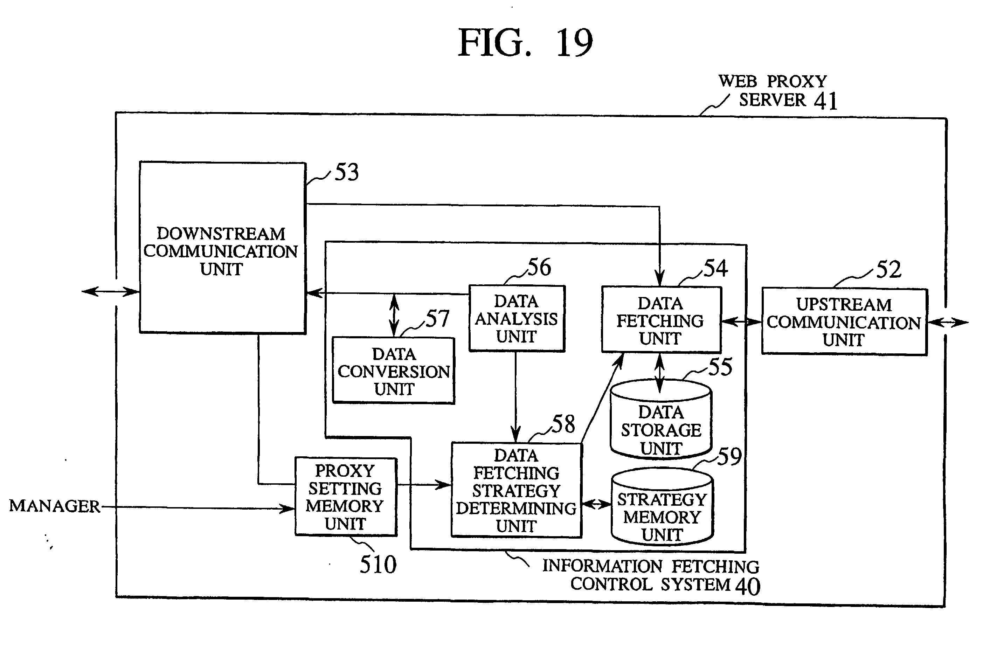

Fig. 19 shows an exemplary internal configuration of the Web proxy server 41 incorporating the information fetching control system 40.

The information fetching control system 40 and the Web proxy server 41 are basically similar to the information fetching control system 20 and the Web browser 21 shown in Fig. 7, so that the differences from the embodiment of Fig. 7 will be mainly described below.

The Web proxy server 41 has an upstream communication unit 52 connected with an upstream system (a Web server or another Web proxy server), a downstream communication unit 53 connected with a downstream system (a Web browser or another Web proxy server), and a proxy setting memory unit 510 for storing the operation setting of this Web proxy server. Here, a side closer to the Web server is referred to as upstream, while a side closer to the Web browser is referred to as downstream. Note that the proxy setting memory unit 510 corresponds to the browser setting memory unit 39 of Fig. 7, and similarly as in the case of Fig. 7, it is also possible to omit this proxy setting memory unit 510. Also, a data conversion unit 57 is not an indispensable element similarly as in the case of Fig. 7.

The downstream communication unit 53 receives an information fetching request from the downstream system, and a data fetching request is transmitted to the upstream system from a data fetching unit 54 of the information fetching control system 40 through the upstream communication unit 52. The data fetching unit 54 then receives data from the upstream system and stores it into a data storage unit 55. At the same time, this data is given to a data analysis unit 56, and the received HTML data is transmitted to the downstream system through the downstream communication unit 53.

Also, in the case of providing the data conversion unit 57, depending on the analysis result of the data analysis unit 56, the received HTML data is converted at the data conversion unit 57 and then transmitted to the downstream system.

A data fetching strategy determining unit 58 determines a data fetching strategy for data to be requested next, according to the analysis result of the data analysis unit 56, by referring to rules stored in a strategy memory unit 59. In some cases, the data fetching strategy determining unit 58 may determine the data fetching strategy by referring to a setting information of the proxy setting memory unit 510 which stores the operation setting of the Web proxy server. Note that the operation setting of the Web proxy server is made by a system manager and/or according to information transferred from the downstream system.

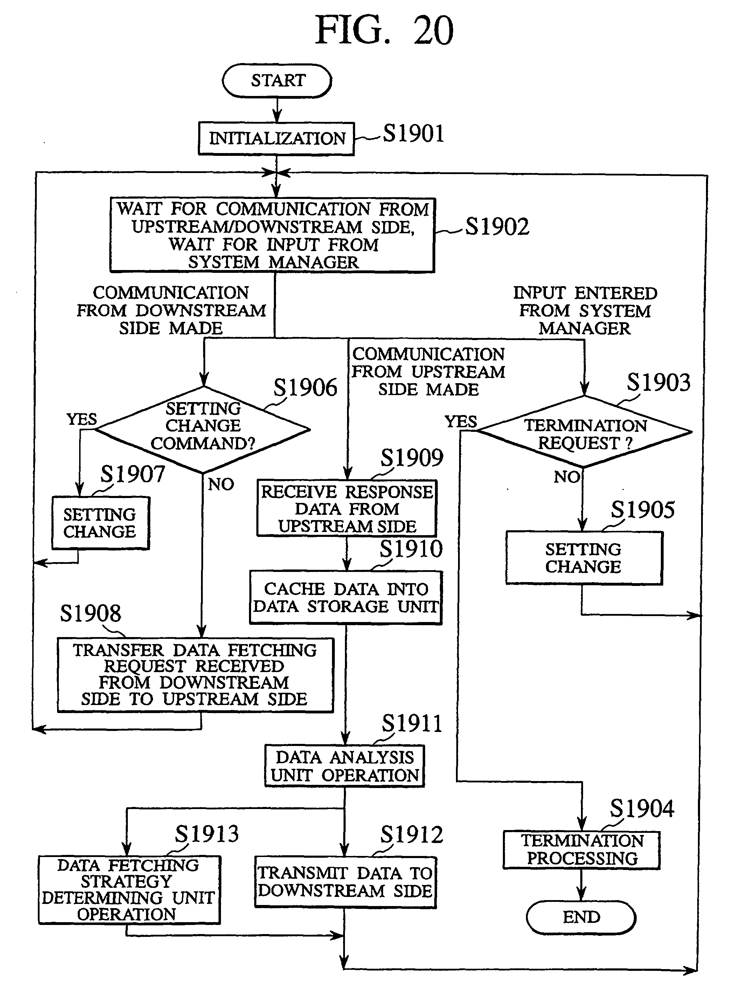

Fig. 20 shows an exemplary operation of the Web proxy server 41.

After the initialization (step S1901), the Web proxy server 41 is put in a state of waiting for communication from upstream/downstream side and waiting for input from the system manager (step S1902).

When there is a termination request from the system manager (step S1903 YES), the termination processing is carried out (step S1904). If the input from the system manager is a command for proxy server setting change, the proxy server setting change is made (step S1906) and the Web proxy server 41 is put in an input/communication waiting state again (step S1902).

If there is a communication from the downstream side, and if it is a command for proxy server setting change (step S1906 YES), the proxy server setting change is made (step S1907) and the Web proxy server 41 is put in an input/communication waiting state again (step S1902). Otherwise, a data fetching request received from the downstream side is transferred to the upstream side (step S1908).

If there is a communication from the upstream side, a response data is received (step S1909) and cached into the data storage unit 55 (step S1910). Then, this data is analyzed at the data analysis unit 56 (step S1911). The data analysis unit 56 then transmits this data to the downstream side (step S1912), and the Web proxy server 41 is put in an input/communication waiting state again (step S1902). In parallel to the data transmission to the downstream side, the data fetching strategy determining unit 58 makes a judgement regarding the next data fetching according to the data analysis result (step S1913).

Note that the data structure to be used in the processing of the analysis result in the Web proxy server 41 is the same as that of Fig. 10 used in the previous embodiment. Also, the operation of the data analysis unit 56 is the same as that of Fig. 11 described above, and the operation of the data fetching strategy determining unit 58 is the same as that of Figs. 12 and 13 described above. Also, the rules to be stored in the strategy memory unit 59 are the same as those of Fig. 14 to Fig. 17 used in the previous embodiment. Also, the proxy server setting information to be stored in the proxy setting memory unit 510 is similar to that of Fig. 9 described above.

Note also that, in this embodiment, the downstream side usually contains multiple clients, and it is also possible to carry out the corresponding processing for each downstream client separately, for example, by storing different proxy settings for different downstream side Web browsers or Web proxy servers and applying them separately in the processing.

In the above, the embodiment in which the information fetching control system of Fig. 1 is incorporated into the Web browser and the embodiment in which the information fetching control system of Fig. 1 is incorporated into the Web proxy server have been described separately, but it is also possible to realize a configuration as shown in Fig. 21, in which an existing Web browser 61 (without the information fetching control system) and a Web proxy server 62 incorporating the information fetching control system 60 are provided on a single computer 66. Note that the information fetching control system 60 and the Web proxy server 62 of Fig. 21 are basically the same as those of Fig. 18 described above (except that it is sufficient for the information fetching control system 60 to deal with a single downstream side client). In this configuration of Fig. 21, it suffices to introduce the Web proxy server to which the present invention is applied, so that there is an advantage that it is unnecessary to make any modification to the existing Web browser.

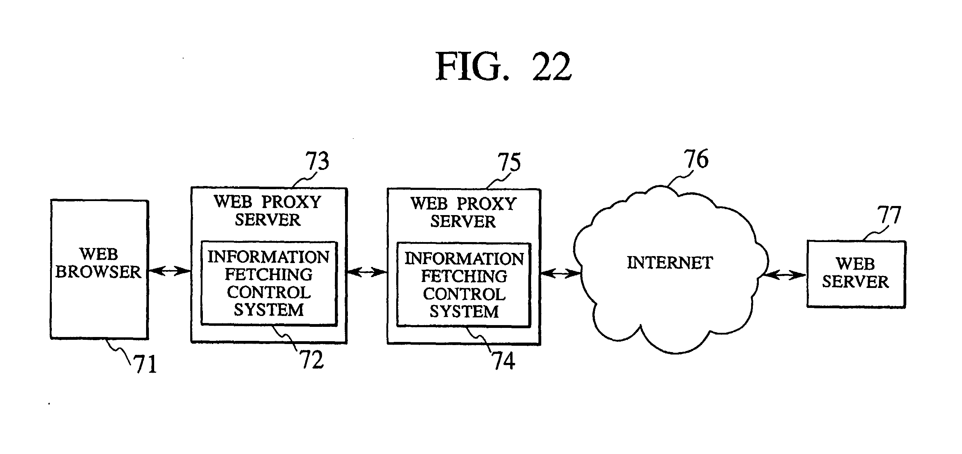

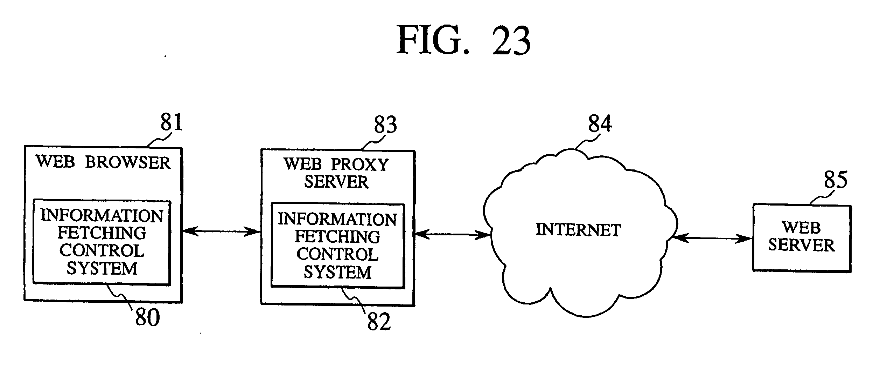

It is also possible to realize a configuration as shown in Fig. 22, in which Web proxy servers 73 and 75 that respectively incorporate information fetching control systems 72 and 74 are connected in multiple stages and cooperated. It is also possible to realize a configuration as shown in Fig. 23, in which a Web browser 81 incorporating an information fetching control system 80 and a Web proxy server 83 incorporating an information fetching control system 82 are cooperated. Note that the Web proxy server incorporating the information fetching control system shown in Fig. 22 and Fig. 23 is basically the same as that of Fig. 18 described above, and the Web browser incorporating the information fetching control system shown in Fig. 23 is basically the same as that of Fig. 2 described above.

Note here that a difference between the Web proxy server and the Web browser is that the browser is an application utilized by an individual user whereas the proxy server is a server common to a system of its clients (a group of browsers or downstream side proxy servers). Consequently, data fetched from the upper level by the proxy server and cached in the proxy server are public or shared data. Similarly, the rules stored in the strategy memory unit of the proxy server are to be applied commonly to a system of its clients so that these rules have to be common to the lower level systems.

It is also possible for the proxy server to temporarily validate a request of each user separately. In such a case, it is possible to change the data fetching strategy for each request of each user while using the common fetching strategies at the proxy server.

Also, in the configuration of Fig. 22 in which the Web proxy servers incorporating the information fetching control systems are cooperated and in the configuration of Fig. 23 in which the Web browser incorporating the information fetching control system and the Web proxy server incorporating an information fetching control system are cooperated, it is possible to expand a communication protocol between the information fetching control systems independently. In this way, it is possible to efficiently realize a control such as changing the data fetching strategy for each user but not caching some fetched data in the proxy server, for example.

In addition, it is also possible to realize a configuration in which the above described embodiments are combined. For example, it is possible to realize a configuration in which the information fetching control system is incorporated in each one of the multiple stage Web proxy servers and Web browsers and cooperate them. It is also possible to realize a configuration in which the Web browsers incorporating the information fetching control systems and the Web servers not incorporating the information fetching control systems coexist, or the Web proxy servers incorporating the information fetching control systems and the Web proxy servers not incorporating the information fetching control systems coexist.

Note that there are various propositions for reducing the amount of data in the low bandwidth transmission line such as a scheme for transmitting only difference information or a scheme for compressing transmission data. There are also various propositions for shortening the Web access response time by prefetching data of pages that are predicted to be accessed next while the user is reading some page using the browser (see, Housel et al., "Web Express: A System for Optimizing Web Browsing in a Wireless Environment", MobiCom96, pp. 108-116, October 1996; Liljeberg et al., "Mowgli WWW Software: Improved Usability of WWW in Mobile WAN Environments", IEEE Global Internet 1996, November 1996; and Fox et al., "Adapting to Network and Client Variability via On-Demand Dynamic Distillation", ASPLOS-VII, October 1996, for example). The present invention can be used in combination with any of these propositions.

Also, in the above, the present invention has been described for exemplary cases using structured documents described in HTML and WWW, but the present invention is also applicable to the other description languages and the other information delivery systems.

As described, according to the present invention, it is possible to control the data fetching in a sophisticated manner according to the data types, so that it is possible to reduce the response time for the user until the requested information is presented to the user (although there can be cases where the entire structured document will be displayed depending on the information content and the setting). Also, the user can request and fetch the entire data only when the user cannot comprehend the information from an outline of the information initially presented, so that it is possible to prevent a wasteful use of a transmission line by the user (it is possible to prevent an unnecessary increase of communication traffic amount), so that it is also possible to effectively utilize the limited bandwidth of a transmission line. In addition, it is also possible to realize the effective prefetching.

It is to be noted that the above described embodiments according to the present invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art.

In particular, each of the information fetching control system and the Web browser or the Web proxy server incorporating the information fetching control system of the above described embodiments can be conveniently implemented in a form of a software package.

Such a software package can be a computer program product which employs a storage medium including stored computer code which is used to program a computer to perform the disclosed function and process of the present invention. The storage medium may include, but is not limited to, any type of conventional floppy disks, optical disks, CD-ROMs, magneto-optical disks, ROMs, RAMs, EPROMs, EEPROMs, magnetic or optical cards, or any other suitable media for storing electronic instructions.

It is also to be noted that, besides those already mentioned above, many modifications and variations of the above embodiments may be made without departing from the novel and advantageous features of the present invention as claimed. Accordingly, all such modifications and variations are intended to be included within the scope of the appended claims.

## Claims

1. An information fetching control system (10, 20, 40, 60, 72, 74, 80, 82), comprising:
a fetching unit (11, 33, 54) configured to fetch a structured document by transmitting a fetching request to a server device (24. 44, 65, 77, 85);
an analysis unit (13, 35, 56) configured to analyze a data structure of the structured document fetched by the fetching unit (11, 33, 54); and
a fetching strategy determining unit (14, 37, 58) configured to guess a data type indicating an information content of a candidate data for a next data fetching originating from the structured document according to an analysis result of the analysis unit (13, 35, 56), and determine a data fetching strategy indicating whether a fetching of the candidate data should be carried out or not according to the data type of the candidate data.

2. The system (10, 20, 40, 60, 72, 74, 80, 82) of claim 1, wherein the fetching strategy determining unit (14, 37, 58) guesses the data type of the candidate data according to at least one of a tag information, a location information, and a comment information contained in the structured document, the tag information indicating a description format of the candidate data, the location information indicating a location of the candidate data, and the comment information indicating comments related to the candidate data.

3. The system (10, 20, 40, 60, 72, 74, 80, 82) of claim 2, wherein the location information is a URL or a file name of the candidate data, and the fetching strategy determining unit (14, 37, 58) guesses the data type of the candidate data according to an extension of the URL or the file name.

4. The system (10, 20, 40, 60, 72, 74, 80, 82) of claim 1, wherein the fetching strategy determining unit (14, 37, 58) determines the data fetching strategy indicating that the fetching of the candidate data should not be carried out or a partial fetching of the candidate data should be carried out, when the data type of the candidate data is one of prescribed data types specified in advance.

5. The system (10, 20, 40, 60, 72, 74, 80, 82) of claim 4, wherein the prescribed data types include data to be generated dynamically, less important data, multimedia data, a program, a page with many links or images, and a large image.

6. The system (10, 20, 40, 60, 72, 74, 80, 82) of claim 5, wherein the less important data include advertisement data and background image data.

7. The system (10, 20. 40, 60, 72, 74, 80, 82) of claim 5, wherein the multimedia data include still image data, animation/video image data, speech/sound/music data, and 3D model data.

8. The system (10, 20, 40, 60, 72, 74, 80, 82) of claim 4, wherein the fetching strategy determining unit (14, 37, 58) determines the data fetching strategy that also indicates a generation of a substitute data for the candidate data when the fetching of the candidate data should not be carried out.

9. The system (10, 20, 40, 60, 72, 74, 80, 82) of claim 8, further comprising a data conversion unit (36, 57) configured to generate the substitute data for the candidate data when the data fetching strategy indicates the generation of the substitute data.

10. The system (10, 20, 40, 60, 72, 74, 80, 82) of claim 4, wherein the fetching strategy determining unit (14, 37, 58) determines the data fetching strategy that also indicates a manner by which the candidate data should be fetched when the fetching of the candidate data should be carried out.

11. The system (10, 20, 40, 60, 72, 74, 80, 82) of claim 1, further comprising a memory unit (15, 38, 59) configured to store a group of rules indicating prescribed types of data for which the fetching of the candidate data should not be carried out;
wherein the fetching strategy determining unit (14, 37, 58) determines the data fetching strategy according to the rules stored in the memory unit (15, 38, 59).

12. The system (10, 20, 40, 60, 72, 74, 80, 82) of claim 11, wherein the rules also indicate an appropriate manner of fetching for each type of data for which the fetching of the candidate data should be carried out.

13. The system (10, 20, 40, 60, 72, 74, 80, 82) of claim 11, further comprising a setting memory unit (39) configured to store a setting information indicating whether a fetching of each type of data is permitted or not;
wherein the fetching strategy determining unit (14, 37, 58) determines the data fetching strategy also according to the setting information stored in the setting memory unit (39).

14. The system (10, 20, 40, 60, 72, 74, 80, 82) of claim 1, wherein the fetching strategy determining unit (14, 37, 58) determines the data fetching strategy indicating that the fetching of the candidate data should not be carried out or a partial fetching of the candidate data should be carried out, such that a response time for a user until a requested information is presented to the user via the system (10, 20, 40, 60, 72, 74, 80, 82) will be reduced.

15. The system (10, 20, 40, 60, 72, 74, 80, 82) of claim 14, wherein the system (10, 20, 40, 60, 72, 74, 80, 82) is connected to the server device (24, 44, 65, 77, 85) at least partially through a low bandwidth transmission line, such that a full fetching of every candidate data will make the response time for the user long.

16. The system (10, 20, 40, 60, 72, 74, 80, 82) of claim 1, wherein the fetching unit (11, 33, 54) also prefetches the candidate data according to the data fetching strategy determined by the fetching strategy determining unit (14, 37, 58).

17. An information fetching control method, comprising the steps of:
fetching a structured document by transmitting a fetching request to a server device (24, 44, 65, 77, 85);
analyzing a data structure of the structured document fetched by the fetching step; and
guessing a data type indicating an information content of a candidate data for a next data fetching originating from the structured document according to an analysis result of the analyzing step, and determining a data fetching strategy indicating whether a fetching of the candidate data should be carried out or not according to the data type of the candidate data.

18. A computer usable medium having computer readable program codes embodied therein for causing a computer to function as an information fetching control system (10, 20, 40, 60, 72, 74, 80, 82), the computer readable program codes include:
a first computer readable program code for causing said computer to fetch a structured document by transmitting a fetching request to a server device (24. 44, 65, 77, 85);
a second computer readable program code for causing said computer to analyze a data structure of the structured document fetched by the first computer readable program code; and
a third computer readable program code for causing said computer to guess a data type indicating an information content of a candidate data for a next data fetching originating from the structured document according to an analysis result of the second computer readable program code, and determine a data fetching strategy indicating whether a fetching of the candidate data should be carried out or not according to the data type of the candidate data.

## Patentansprüche

1. Informationsabruf-Steuersystem (10, 20, 40, 60, 72, 74, 80, 82), welches folgendes aufweist:
eine Abrufeinheit (11, 33, 54), die derart konfiguriert ist, um ein strukturiertes Dokument abzurufen, und zwar indem eine Abrufanforderung zu einer Server-Vorrichtung (24, 44, 65, 77, 85) übertragen wird;
eine Analyseeinheit (13, 35, 56), die derart konfiguriert ist, um eine Datenstruktur des mittels der Abrufeinheit (11, 33, 54) abgerufenen strukturierten Dokumentes zu analysieren; und
eine Abrufstrategie-Ermittlungseinheit (14, 37, 58), die derart konfiguriert ist, um gemäß einem Analyseergebnis der Analyseeinheit (13, 35, 56) einen Daten-Typ abzuschätzen, der einen Informationsinhalt von Kandidaten-Daten für einen von dem strukturierten Dokument herrührenden nächsten Daten-Abruf anzeigt, sowie um gemäß dem Datentyp der Kandidaten-Daten eine Daten-Abrufstrategie zu ermitteln, die anzeigt, ob oder ob nicht ein Abrufen der Kandidaten-Daten ausgeführt werden soll.

2. System (10, 20, 40, 60, 72, 74, 80, 82) nach Anspruch 1, in welchem die Abrufstrategie-Ermittlungseinheit (14, 37, 58) gemäß zumindest einer in dem strukturierten Dokument enthaltenen Tag-Information, Speicherort-Information oder Kommentar-Information den Datentyp der Kandidaten-Daten abschätzt, wobei die Tag-Information ein Beschreibungs-Format der Kandidaten-Daten anzeigt, die Standort-Information einen Speicherort der Kandidaten-Daten anzeigt, und die Kommentar-Information Anmerkungen hinsichtlich der Kandidaten-Daten anzeigt.

3. System (10, 20, 40, 60, 72, 74, 80, 82) nach Anspruch 2, in welchem die Standort-Information eine Internetadresse URL oder ein Dateiname der Kandidaten-Daten ist, und in welchem die Abrufstrategie-Ermittlungseinheit (14, 37, 58) den Datentyp der Kandidaten-Daten gemäß einer Endung bzw. Erweiterung der Internetadresse URL oder des Dateinamens abschätzt.

4. System (10, 20, 40, 60, 72, 74, 80, 82) nach Anspruch 1, in welchem die Abrufstrategie-Ermittlungseinheit (14, 37, 58) jene Daten-Abrufstrategie ermittelt, die anzeigt, dass das Abrufen der Kandidaten-Daten nicht ausgeführt werden soll, oder die anzeigt, dass ein Abrufen der Kandidaten-Daten zum Teil ausgeführt werden soll, wenn der Daten-Typ der Kandidaten-Daten ein Daten-Typ von zuvor festgelegten Daten-Typen ist, die vorab spezifiziert sind.

5. System (10, 20, 40, 60, 72, 74, 80, 82) nach Anspruch 4, in welchem die zuvor festgelegten Daten-Typen Daten enthalten, die dynamisch erzeugt werden müssen, weniger wichtige Daten enthalten, Multimedia-Daten enthalten, ein Programm enthalten, eine Seite mit vielen Verknüpfungen oder Bildern enthalten, und ein großes Bild enthalten.

6. System (10, 20, 40, 60, 72, 74, 80, 82) nach Anspruch 5, in welchem die weniger wichtigen Daten Werbungs-Daten und Hintergrund-Bilddaten enthalten.

7. System (10, 20, 40, 60, 72, 74,80, 82) nach Anspruch 5, in welchem die Multimedia-Daten Standbild-Daten, Animations-/Video-Bilddaten, Sprach-/Geräusch-/Musik-Daten und 3D-Modell-Daten enthalten.

8. System (10, 20, 40, 60, 72, 74, 80, 82) nach Anspruch 4, in welchem die Abrufstrategie-Ermittlungseinheit (14, 37,58) jene Daten-Abrufstrategie ermittelt, die ebenso ein Erzeugen von Ersatz-Daten für die Kandidaten-Daten anzeigt, wenn das Abrufen der Kandidaten-Daten nicht ausgeführt werden soll.

9. System (10, 20, 40, 60, 72, 74, 80, 82) nach Anspruch 8, welches ferner eine Daten-Konvertierungseinheit (36, 57) aufweist, die derart konfiguriert ist, um die Ersatz-Daten für die Kandidaten-Daten zu erzeugen, wenn die Daten-Abrufstrategie das Erzeugen der Ersatz-Daten anzeigt.

10. System (10, 20, 40, 60, 72, 74, 80, 82) nach Anspruch 4, in welchem die Abrufstrategie-Ermittlungseinheit (14, 37, 58) jene Daten-Abrufstrategie ermittelt, die ebenso eine Art und Weise anzeigt, mit welcher die Kandidaten-Daten abgerufen werden sollen, wenn das Abrufen der Kandidaten-Daten ausgeführt werden soll.

11. System (10, 20, 40, 60, 72, 74, 80, 82) nach Anspruch 1, welches ferner eine Speichereinheit (15, 38, 59) aufweist, die derart konfiguriert ist, um eine Gruppe von Regeln zu speichern, die zuvor festgelegte Typen von Daten anzeigen, für welche das Abrufen der Kandidaten-Daten nicht ausgeführt werden soll;
wobei die Abrufstrategie-Ermittlungseinheit (14, 37, 58) die Daten-Abrufstrategie gemäß den in der SpeicherEinheit (15, 38, 59) gespeicherten Regeln ermittelt.

12. System (10, 20, 40, 60, 72, 74,80, 82) nach Anspruch 11, in welchem die Regeln ebenso eine geeignete Art und Weise des Abrufens von jedem Datentyp anzeigen, für welchen das Abrufen der Kandidaten-Daten ausgeführt werden soll.

13. System (10, 20, 40, 60, 72, 74, 80, 82) nach Anspruch 11, welches ferner eine Einstellungs-Speichereinheit (39) aufweist, die derart konfiguriert ist, um Einstellungsinformation zu speichern, die anzeigt, ob oder ob nicht ein Abrufen von jedem Datentyp zugelassen ist;
wobei die Abrufstrategie-Ermittlungseinheit (14, 37, 58) die Daten-Abrufstrategie ebenso gemäß der in der Einstellungs-Speichereinheit (39) gespeicherten Einstellinformation ermittelt.

14. System (10, 20, 40, 60, 72, 74, 80, 82) nach Anspruch 1, in welchem die Abrufstrategie-Ermittlungseinheit (14, 37, 58) jene Daten-Abrufstrategie ermittelt, die anzeigt, dass das Abrufen der Kandidaten-Daten nicht ausgeführt werden soll, oder die anzeigt, dass ein Abrufen der Kandidaten-Daten zum Teil ausgeführt werden soll, so dass eine Antwortzeit für einen Benutzer, bis dem Benutzer eine angeforderte Information über das System (10, 20, 40, 60, 72, 74, 80, 82) dargestellt wird, herabgesetzt wird.

15. System (10, 20, 40, 60, 72, 74, 80, 82) nach Anspruch 14, in welchem das System (10, 20, 40, 60, 72, 74, 80, 82) zumindest teilweise über eine Übertragungsleitung niedriger Bandbreite mit der Server-Vorrichtung (24, 44, 65, 77, 85) verbunden ist, so dass ein vollständiges Abrufen von allen Kandidaten-Daten die Antwortzeit für den Benutzer lang machen wird.

16. System (10, 20, 40, 60, 72, 74, 80, 82) nach Anspruch 1, in welchem die Abrufeinheit (11, 33, 54) ebenso gemäß der durch die Abrufstrategie-Ermittlungseinheit (14, 37, 58) ermittelten Daten-Abrufstrategie die Kandidaten-Daten im Voraus abruft bzw. vor-abruft.

17. Informationsabruf-Steuerverfahren, welches die folgenden Verfahrensschritte aufweist:
Abrufen eines strukturierten Dokuments, indem eine Abrufanforderung zu einer Server-Vorrichtung (24, 44, 65, 77, 85) übertragen wird;
Analysieren einer Datenstruktur des strukturierten durch den Abruf-Verfahrensschritt abgerufenen Dokuments; und
Abschätzen eines Datentyps, der einen Informationsinhalt von Kandidaten-Daten für ein von dem strukturierten Dokument herrührendes Abrufen nächster Daten anzeigt, und zwar gemäß eines Analyseergebnisses des Analysier-Verfahrensschrittes, und Ermitteln einer Daten-Abrufstrategie, die gemäß dem Datentyp der Kandidaten-Daten anzeigt, ob oder ob nicht ein Abrufen der Kandidaten-Daten ausgeführt werden soll.

18. Computer-nutzbares Medium, welches Computer-lesbare Programmcodes enthält, um zu bewirken, dass einen Computer ein Informationsabruf-Steuersystem (10, 20, 40, 60, 72, 74, 80, 82) funktioniert, wobei die Computer-lesbaren Programmcodes folgendes aufweisen:
einen ersten Computer-lesbaren Programmcode, um zu bewirken, dass der Computer durch Übertragung einer Abrufanforderung zu einer Server-Vorrichtung (24, 44, 65, 77, 85) ein strukturiertes Dokument abruft;
einen zweiten Computer-lesbaren Programmcode, um zu bewirken, dass der Computer eine Daten-Struktur des durch die ersten Computer-lesbaren Programmcodes abgerufenen strukturierten Dokumentes analysiert; und
einen dritten Computer-lesbaren Programmcode, um zu bewirken, dass der Computer gemäß einem Analyseergebnis des zweiten Computer-lesbaren Programmcodes einen Datentyp abschätzt, der einen Informationsinhalt von Kandidaten-Daten für ein von dem strukturierten Dokument herrührendes Abrufen nächster Daten anzeigt, und dass der Computer gemäß dem Datentyp der Kandidaten-Daten eine Daten-Abrufstrategie ermittelt, die anzeigt, ob oder ob nicht ein Abrufen der Kandidaten-Daten ausgeführt werden soll.

## Revendications

1. Système de commande de recherche d'informations (10, 20, 40, 60, 72, 74, 80, 82), comprenant :
une unité de recherche (11, 33, 54) configurée pour rechercher un document structuré en émettant une demande de recherche à un dispositif de serveur (24, 44, 65, 77, 85) ;
une unité d'analyse (13, 35, 56) configurée pour analyser une structure de données du document structuré recherché par l'unité de recherche (11, 33, 54) ; et
une unité de détermination de stratégie de recherche de données (14, 37, 58) configurée pour estimer un type de données indiquant un contenu d'informations de données candidates pour une recherche de données suivantes émanant d'un document structuré selon un résultat d'analyse de l'unité d'analyse (13, 35, 56), et pour déterminer une stratégie de recherche de données indiquant si une recherche des données candidates devrait être réalisée ou non selon le type de données des données candidates.

2. Système (10, 20, 40, 60, 72, 74, 80, 82) selon la revendication 1, dans lequel l'unité de détermination de stratégie de recherche (14, 37, 58) estime le type de données des données candidates selon au moins une des informations de balise, des informations d'emplacement, et des informations de commentaire contenues dans le document structuré, les informations de balise indiquant un format de description des données candidates, les informations d'emplacement indiquant un emplacement des données candidates, et les informations de commentaire indiquant des commentaires liés aux données candidates.

3. Système (10, 20, 40, 60, 72, 74, 80, 82) selon la revendication 2, dans lequel les informations d'emplacement sont un nom d'URL ou un nom de fichier des données candidates, et l'unité de détermination de stratégie de recherche de données (14, 37, 58) estime le type de données des données candidates selon une extension du nom d'URL ou du nom de fichier.

4. Système (10, 20, 40, 60, 72, 74, 80, 82) selon la revendication 1, dans lequel l'unité de détermination de stratégie de recherche de données (14, 37, 58) détermine la stratégie de recherche de données indiquant que la recherche des données candidates ne devrait pas être réalisée ou une recherche partielle des données candidates devrait être réalisée, lorsque le type de données des données candidates est un des types de données prescrits spécifiés à l'avance.

5. Système (10, 20, 40, 60, 72, 74, 80, 82) selon la revendication 4, dans lequel les types de données prescrits comprennent des données à générer dynamiquement, des données de moindre importance, des données multimédia, un programme, une page avec de nombreux liens ou images, et une grande image.

6. Système (10, 20, 40, 60, 72, 74, 80, 82) selon la revendication 5, dans lequel les données de moindre importance comprennent des données de publicité et des données d'image d'arrière-plan.

7. Système (10, 20, 40, 60, 72, 74, 80, 82) selon la revendication 5, dans lequel les données multimédia comprennent encore des données d'image, des données d'image d'animation/vidéo, des données de vocal/de son /de musique, et des données de modèles 3D.

8. Système (10, 20, 40, 60, 72, 74, 80, 82) selon la revendication 4, dans lequel l'unité de détermination de stratégie de recherche (14, 37, 58) détermine la stratégie de recherche de données qui indique aussi une génération de données de substitution pour les données candidates lorsque la recherche des données candidates ne devrait pas être réalisée.

9. Système (10, 20, 40, 60, 72, 74, 80, 82) selon la revendication 8, comprenant en outre une unité de conversion de données (36, 57) configuré pour générer les données de substitution pour les données candidates lorsque la stratégie de recherche de données indique la génération des données de substitution.

10. Système (10, 20, 40, 60, 72, 74, 80, 82) selon la revendication 4, dans lequel l'unité de détermination de stratégie de recherche (14, 37, 58) détermine la stratégie de recherche de données qui indique aussi une manière par laquelle les données candidates devraient être recherchées lorsque la recherche des données candidates devrait être réalisée.

11. Système (10, 20, 40, 60, 72, 74, 80, 82) selon la revendication 1, comprenant en outre une unité de mémoire (15, 38, 59) configurée pour stocker un groupe de règles indiquant des types prescrits de données pour lesquels la recherche des données candidates ne devraient pas être réalisée ;
dans lequel l'unité de détermination de stratégie de recherche de données (14, 37, 58) détermine la stratégie de recherche de données selon les règles stockées dans l'unité de mémoire (15, 38, 59).

12. Système (10, 20, 40, 60, 72, 74, 80, 82) selon la revendication 11, dans lequel les règles indiquent aussi une manière appropriée de rechercher chaque type de données pour lesquels la recherche des données candidates devrait être réalisée.

13. Système (10, 20, 40, 60, 72, 74, 80, 82) selon la revendication 11, comprenant en outre une unité de mémoire de réglage (39) configurée pour stocker des informations de réglage indiquant si une recherche de chaque type de données est permise ou non ;
dans lequel l'unité de détermination de stratégie de recherche (14, 37, 58) détermine la stratégie de recherche de données aussi selon les informations de réglage stockées dans l'unité de mémoire de réglage (39).

14. Système (10, 20, 40, 60, 72, 74, 80, 82) selon la revendication 1, dans lequel l'unité de détermination de stratégie de recherche (14, 37, 58) détermine la stratégie de recherche de données indiquant que la recherche des données candidates ne devrait pas être réalisée ou une recherche partielle des données candidates devrait être réalisée, pour qu'un temps de réponse soit réduit pour un utilisateur jusqu'à ce que les informations demandées soient présentées à l'utilisateur via le Système (10, 20, 40, 60, 72, 74, 80, 82).

15. Système (10, 20, 40, 60, 72, 74, 80, 82) selon la revendication 14, dans lequel le système (10, 20, 40, 60, 72, 74, 80, 82) est raccordé au dispositif de serveur (24, 44, 65, 77, 85) au moins partiellement à travers une ligne de transmission à faible bande passante, de sorte qu'une recherche complète de chaque donnée candidate rendra le temps de réponse pour l'utilisateur long.

16. Système (10, 20, 40, 60, 72, 74, 80, 82) selon la revendication 1, dans lequel l'unité de recherche (11, 33, 54) pré-recherche aussi les données candidates selon la stratégie de recherche de données déterminées par l'unité de détermination de stratégie de recherche de données (14, 37, 58).

17. Procédé de commande de recherche d'informations, comprenant les étapes de :
recherche un document structuré en émettant une demande de recherche à un dispositif de serveur (24, 44, 65, 77, 85) ;
analyse une structure de données d'un document structuré recherché par l'étape de recherche ; et
estimation d'un type de données indiquant un contenu d'informations de données candidates pour une recherche de données suivante émanant du document structuré selon un résultat d'analyse de l'étape d'analyse, et détermination une stratégie de recherche de données indiquant si une recherche des données candidates devrait être réalisée ou non selon le type de données des données candidates.

18. Support d'ordinateur utilisable ayant des codes de programme lisibles par ordinateur incorporés dans celui-ci pour obliger un ordinateur à fonctionner comme un système de commande de recherche d'informations (10, 20, 40, 60, 72, 74, 80, 82), les codes de programme lisibles par ordinateur comprennent :
un premier code de programme lisible par ordinateur pour obliger ledit ordinateur à rechercher un document structuré en émettant une demande de recherche à un dispositif de serveur (24, 44, 65, 77, 85) ;
un second code de programme lisible par ordinateur pour obliger ledit ordinateur à analyser une structure de données du document structuré recherché par le premier code de programme lisible par ordinateur ; et
un troisième code de programme lisible par ordinateur pour obliger ledit ordinateur à estimer un type de données indiquant un contenu d'informations de données candidates pour une recherche de données suivantes émanant du document structuré selon un résultat d'analyse du second code de programme lisible par ordinateur, et pour déterminer une stratégie de recherche de données indiquant si une recherche des données candidates devrait être réalisée ou non selon le type de données des données candidates.
